# EUROPÄISCHE PATENTSCHRIFT

(11) **EP 0 531 682 B1**
(45) Veröffentlichungstag und Bekanntmachung des Hinweises auf die Patenterteilung: **23.04.1997**
(21) Anmeldenummer: 92112659.5
(22) Anmeldetag: 24.07.1992
(51) Int. Cl.: B29C 65/20, E06B 3/96

(54) **Vorrichtung zum Verschweissen von Profilen aus Kunststoff**
Apparatus for welding profiled plastic elements
Dispositif pour le soudage de profilés en matière plastique

(30) Priorität: 07.09.1991 DE 9111121 U
(43) Veröffentlichungstag der Anmeldung: 17.03.1993
(73) Patentinhaber: KOMMANDITGESELLSCHAFT HASSOMAT MASCHINENBAU GmbH & Co., D-22047 Hamburg (DE)
(72) Erfinder: Eckleben, Helmut, W-2733 Breddorf (DE)
(74) Vertreter: Patentanwälte Hauck, Graalfs, Wehnert, Döring, Siemons

(56) Entgegenhaltungen:
- DE-A- 1 926 959
- DE-A- 2 123 939
- DE-A- 2 201 656
- GB-A- 2 103 692
- KUNSTSTOFFE. Bd. 71, Nr. 10, Oktober 1981, MUNCHEN DE Seiten 753 - 757 VON H. VOWINKEL 'Heizelement-, Warmgas- und Extrusionsschweissen'

## Beschreibung

Die Erfindung bezieht sich auf ein Verfahren zum Betrieb einer Vorrichtung zum Verschweißen von Profilen aus Kunststoff, insbesondere für Fensterrahmen nach dem Oberbegriff des Anspruchs 1.

Fensterrahmen aus Kunststoffprofilen sind bekannt. Die Kunststoffprofile werden als Hohlprofile im Strangpreßverfahren hergestellt und auf Gehrung geschnitten. Sie werden anschließend zur Bildung des Rahmens miteinander verschweißt. Aus der DE-A-19 26 956 ist eine Vorrichtung zum Verschweißen von Fensterrahmenprofilen bekanntgeworden, bei der vier Schweißaggregate vorgesehen sind, von denen jeweils zwei auf einem von zwei parallelen Aggregateträgern angeordnet sind, wobei jeweils ein Aggregat eines Paares relativ zum anderen auf dem Aggregatträger und ein Aggregatträger relativ zum anderen Aggregatträger verstellbar ist. Jedes Aggregat hat zwei Auflagen, zwei mit den Auflagen verbundene Konterprofile und zwei Druckplatten für die Enden der jeweils eingelegten Profile. Die Profile sind jeweils entlang senkrecht aufeinanderstehender Verstellachsen mittels eines Vorschubschlittens relativ zueinander verstellbar, wobei die Vorschubschlitten auch Druckplatten aufweisen zum Festlegen der Profile sowie ein verstellbares Heizelement zum Erwärmen der miteinander zu verschweißenden Profile.

Die beschriebenen Fensterprofile können mit einer Dichtlippe versehen werden, die in geeigneter Weise an das Profil angeformt wird, beispielsweise durch Verklebung. Beim Verschweißen der Dichtlippen bilden diese einen undefinierten relativ harten Wulst, der die Dichtwirkung beeinträchtigt.

Der Erfindung liegt die Aufgabe zugrunde, ein Verfahren zum Betrieb einer Vorrichtung zum Verschweißen von Profilen aus Kunststoff, insbesondere für Fensterrahmen anzugeben, bei dem geeignete Mittel vorgesehen werden können, welche die Bildung von eingeschnürten definierten Wülsten erlaubt, die gleichwohl nicht die anschließende Handhabung des aus den Profilen gebildeten Rahmens beeinträchtigen.

Diese Aufgabe wird durch die Merkmale des Patentanspruchs 1 gelöst.

Die Betriebsweise nach der Erfindung ermöglicht für Messerkanten, daß auch der innen liegende äußere Bereich der Profile während des Fügens und des Schweißens sehr nahe zusammengebracht werden kann, so daß ein stark eingeschnürter definierter Wulst gebildet ist. Bevor der Rahmen aus den Aggregaten entfernt wird, können mit Hilfe der Aggregate und des Aggregatträgers die Schlitten in eine Stellung gebracht werden, in der die Auflagen, die Konterprofile und die Druckplatten um einen gewissen Bereich voneinander entfernt sind. Bei dem anschließenden Herausheben der Rahmen haben die Messerkanten die Wülste freigegeben, so daß die Wülste nicht durch eine Messerkante abgerissen werden oder die gesamte Verschweißung beeinträchtigt wird. Bei der erfindungsgemäßen Betriebsweise ist daher das Vorsehen von Messerkanten möglich, die gleichwohl beim Entfernen des Rahmens nicht das Herausheben beeinträchtigen.

Nach einer Ausgestaltung der Erfindung werden nach dem Anheben des Rahmens die Schlitten vom Rahmen entfernt zur Absenkung des Rahmens auf eine Abfördervorrichtung. Auf diese Weise läßt sich eine automatische Entnahme eines Fensterrahmens bewerkstelligen.

Eine Vorrichtung zur Durchführung des erfindungsgemäßen Verfahrens sieht vor, daß die Konterprofile eine Begrenzungsnut für eine an den Profilen angebrachte Dichtlippe aufweisen, die an den Querschnitt der Dichtlippe angepaßt in einem Auflagerabschnitt am vorderen Ende der Konterprofile geformt ist, wobei sich an die Begrenzungsnut eine Aufnahmenut anschließt, in der die Dichtlippe frei aufnehmbar ist. Dadurch, daß jedes Konterprofil verstellbar ist, können die Profile in einer Relativlage zu einem Konterprofil eingelegt werden, so daß die Dichtlippe zunächst in die Aufnahmenut des Konterprofils eintaucht. Anschließend erfolgt eine Relativverstellung der Konterprofile zu den eingelegten Kunststoffprofilen, wobei die Dichtlippe in die Begrenzungsnut einläuft, bis die Konterprofile und die Kunststoffprofile ihre Bearbeitungsposition erreicht haben, in der die Kunststoffprofile nur geringfügig über den freien Enden der Konterprofile überstehen. Der Überstand berücksichtigt den sogenannten Abbrand beim Erweichen der zu verschweißenden Enden der Profile mit Hilfe eines Heizelements. Haben die Konterprofile und die Kunststoffprofile die richtige Bearbeitungsposition zueinander, werden die Kunststoffprofile mit Hilfe der Druckplatten festgelegt. Die Festlegung findet jedoch erst statt, nachdem eine Zentrierung erfolgt ist. Nach einer weiteren Ausgestaltung der erfindungsgemäßen Vorrichtung ist vorgesehen, daß das Konterprofil angrenzend an die Begrenzungsnut auch horizontale Messerkanten aufweist. Das Konterprofil kann darüber hinaus auch horizontale bzw. von der Vertikalen abweichende Messerkanten aufweisen, damit in sonst unzugänglichen Bereichen eine einwandfreie Wulstbegrenzung stattfindet.

Die Erfindung wird nachfolgend anhand von Zeichnungen näher erläutert.
- Fig. 1: zeigt die Draufsicht auf eine schematisch dargestellte Vorrichtung zur Durchführung des erfindungsgemäßen Verfahrens in der Einlegeposition.
- Fig. 2: zeigt die Vorrichtung nach Fig. 1 in der Fügeposition.
- Fig. 3: zeigt die Vorrichtung nach Fig. 1 in der Entnahmeposition.
- Fig. 4: zeigt eine Draufsicht auf eine Einzelheit der Vorrichtung nach den Figuren 1 und 3.
- Fig. 5: zeigt die Frontansicht eines Konterprofils der Darstellung nach Fig. 4 in Richtung Pfeil 5.
- Fig. 6: zeigt die Ansicht der Einzelheit nach Fig. 4 in Richtung Pfeil 6.

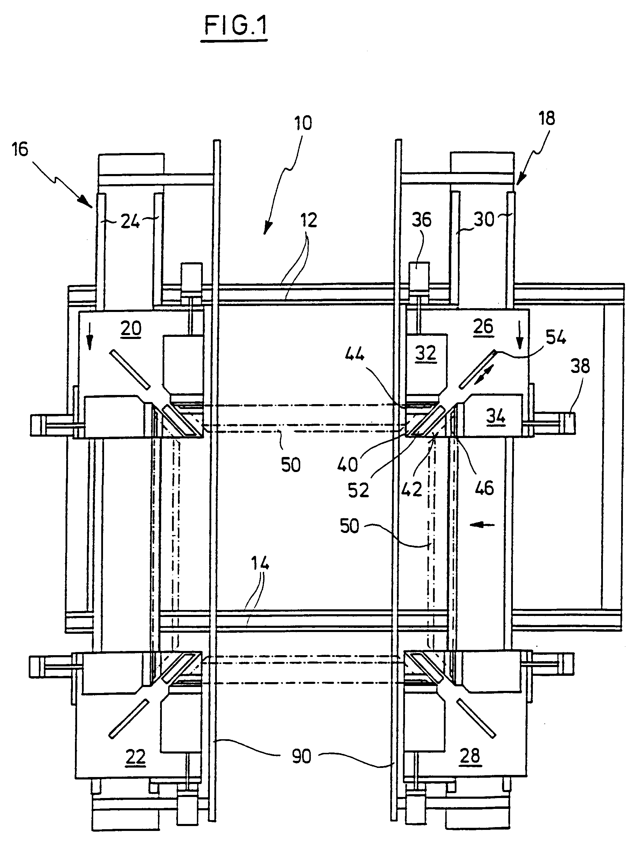

Die in den Figuren 1 bis 3 dargestellte Vorrichtung weist einen Grundrahmen 10 auf, der zwei parallel beabstandete Führungen 12, 14 aufweist. Auf dem Rahmen 10 ist stationär ein Aggregatträger 16 angeordnet. Er kann zum Beispiel auf den Führungen 12, 14 verstellt werden, hat jedoch hierfür keinen eigenen Antrieb und wird außerdem mit Hilfe geeigneter Mittel festgesetzt. Ein zweiter Aggregatträger 18 kann auf den Führungen 12, 14 senkrecht zum ersten Aggregatträger 16 verfahren werden. Der Antrieb hierfür ist nicht dargestellt.

Auf dem ersten Aggregatträger sind zwei Schweißaggregate 20, 22 angeordnet, von denen das Schweißaggregat 20 entlang von Führungen 24 gegenüber dem zweiten Aggregat 22 verstellbar ist. Der Verstellantrieb hierfür ist ebenfalls nicht dargestellt. Zwei weitere Schweißaggregate 26, 28 sind auf dem zweiten Aggregatträger 18 angeordnet. Das Schweißaggregat 28 ist stationär, während das Schweißaggregat 26 entlang von Führungen 30 gegenüber dem stationären Aggregat 28 verstellbar ist.

Der Aufbau der Schweißaggregate 20, 22, 26, 28 ist gleich.

Daher soll bei den weiteren Betrachtungen lediglich das Schweißaggregat 26 berücksichtigt werden. Es weist zwei Schlitten 32, 34 auf, die mit Hilfe von Verstellzylindern 36, 38 entlang aufeinander senkrecht stehender Achsen verstellbar sind. Jeder Schlitten 32 bzw. 34 weist eine Auflage 40 bzw. 42 und ein Konterprofil 44 bzw. 46 auf, auf die bzw. gegen die die Enden der Profile gelegt werden, die strichpunktiert zum Beispiel bei 50 angedeutet sind. Oberhalb im Abstand zu den Auflagen 40, 42 bzw. den Konterprofilen 44, 46 sind (nicht gezeigte) Druckplatten angeordnet, die mit Hilfe von Verstellzylindern vertikal verstellbar sind, um die Profile 50 gegen die Auflagen 40, 42 anzupressen.

Das Schweißaggregat 26 weist ferner ein Zentrierelement 52 auf, das mit Hilfe eines nicht gezeigten Verstellantriebs in der Höhe verstellt werden kann. Schließlich ist am Schweißaggregat ein längliches Heizelement 54 vorgesehen, das mit Hilfe eines nicht gezeigten Verstellantriebs in Richtung des Doppelpfeils verstellbar ist.

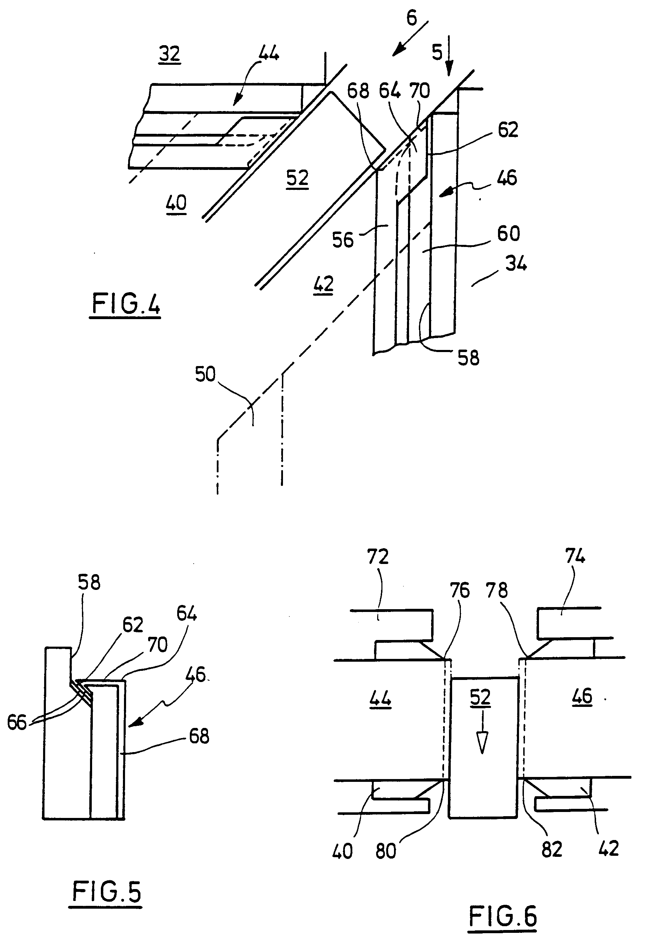

In den Figuren 4 und 5 sind die Konterprofile 44, 46 näher dargestellt. Nachfolgend soll lediglich das Konterprofil 46 behandelt werden, da beide gleich ausgebildet sind. Das Konterprofil 46 weist eine obere Auflagefläche 56 auf, auf die die Unterseite des Profils 50 aufgelegt wird. Ferner weist es eine senkrecht dazu angeordnete seitliche Anlagefläche 58 auf. Eine Vertiefung oder Aufnahmenut 60 geht zum vorderen Ende des Konterprofils 46 über in eine Begrenzungsnut 62. Die Auflagefläche 56 ist im Bereich der Begrenzungsnut 62 in einem Abschnitt 64 verbreitert bis annähernd zur seitlichen Begrenzungsfläche 58. Wie aus Fig. 5 zu erkennen, erstreckt sich die Begrenzungsnut 62 im Winkel zur Vertikalen. Sie ist in ihrem Querschnitt und ihrer Lage so geformt,daß sie eine am Profil 50 angeformte Dichtlippe passen aufnimmt, ohne diese zu verformen. Beidseits der Begrenzungsnut 62 ist an dem vorderen Ende des Konterprofils 46 eine Messerkante, wie bei 66 dargestellt. Außerdem befinden sich Messerkanten bei 68 und 70, d.h. unterhalb der Auflagefläche 64, wie zum Beispiel in Fig. 4 durch die gestrichelte Linie angedeutet.

Bei der Darstellung in Fig. 6 sind Druckplatten 72, 74 angedeutet, die ebenfalls mit Messerkanten 76, 78 versehen sind, wie auch die Auflagen 40, 42, wie bei 80, 82 dargestellt.

Die beschriebene Vorrichtung arbeitet wie folgt.

Für eine gegebene Abmessung der Profile 50 nehmen Aggregatträger 18, die Aggregate 20, 22, 26, 28 sowie die Schlitten 32, 34 der Aggregate eine vorgegebene Stellung ein, die zum Beispiel über eine numerische Steuerung der Antriebe erreicht wird. Diese Position ist in Fig. 1 und Fig. 4 dargestellt. In dieser stehen die Konterprofile 44, 46 über die Enden der eingelegten Profile 50 ein gewisses Maß über, zum Beispiel 30 bis 35 mm. Falls die Profile eine außen angebrachte Dichtlippe aufweisen, ist auf jeden Fall sichergestellt, daß die Dichtlippe im Abstand zum Auflegeabschnitt 64 liegt und in die Aufnahmenut 58 eintaucht (Fig. 4). Nach dem Einlegen der Profile 50 werden dann der Aggregatträger 18 und die Aggregate 20, 26 in Richtung der Pfeile verstellt, wobei sich die Profile 50 gegen den nach oben gefahrenen Zentrieranschlag 52 anlegen und sich die Konterprofile relativ zu den Profilen 50 verschieben. Dabei taucht eine an den Profilen angeordnete Dichtlippe in die Begrenzungsnut der Konterprofile, wie in Verbindung mit Fig. 4 beschrieben wurde. Die Endstellung der Konterprofile wird durch die numerische Steuerung vorgegeben. Sie ist derart, daß die Enden der zu verschweißenden Kunststoffprofile einige Millimeter über das Konterprofil und die Auflage bzw. über die untere und obere Messerkante überstehen. Dieser überstand entspricht dem späteren Abbrand beim Erwärmen der zu verschweißenden Profile.

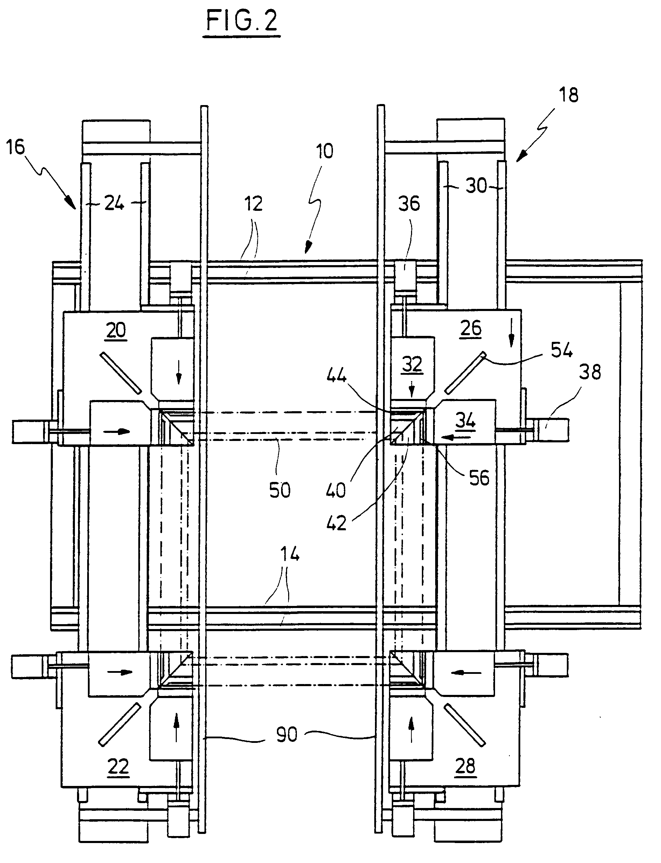

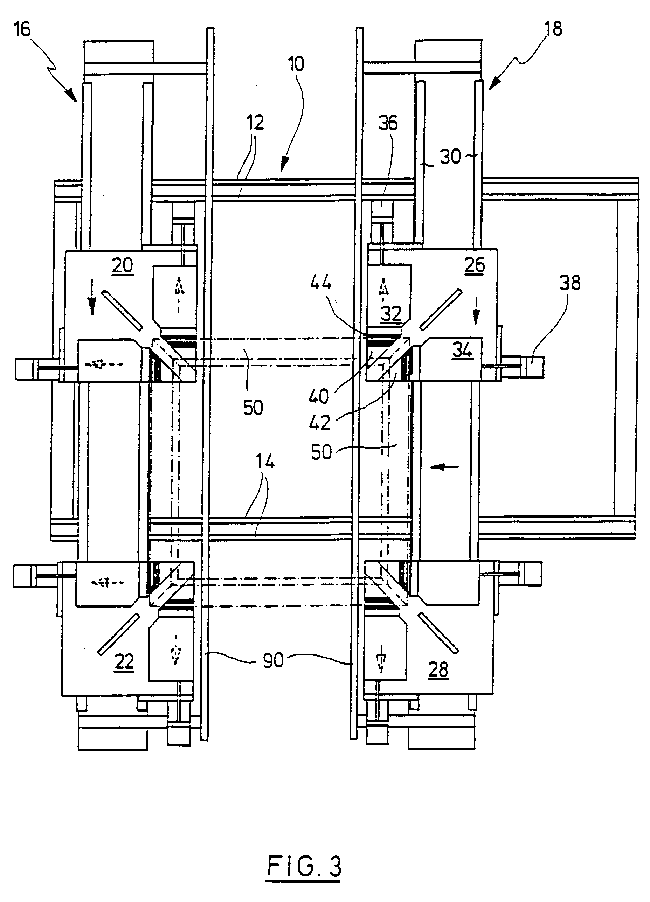

Nachdem auf diese Weise die Profile 50 zentriert sind, werden die Druckplatten jedes Schlittens 32, 34 abgesenkt zwecks Festlegung der Profile auf den Aggregaten. Anschließend werden mit Hilfe der Verstellzylinder die Schlitten 32, 34 etwas voneinander entfernt, so daß das Zentrierglied 52 in die abgesenkte Stellung fahren kann, wie durch Pfeil in Fig. 6 angedeutet. Anschließend fährt das längliche Heizelement 54 in den Spalt, worauf sich die Schlitten 32, 34 erneut in Bewegung setzen und die Enden der zu verschweißenden Profile gegen das Heizelement 54 fahren. Das Heizelement ist dabei quer zu seiner Längserstreckung schwimmend gelagert, so daß es wirksam mit beiden Enden in Eingriff treten kann. Die Profile werden mit einem vorgegebenen Druck gegen das Heizelement angepreßt, wobei eine nicht gezeigte Wegmessung den Vorschub stoppt, wenn ein vorgegebener Weg zurückgelegt wurde, beispielsweise in einer Größenordnung, daß 2 mm Abbrand erreicht sind. Anschließend fahren die Schlitten 32, 34 wieder etwas auseinander, so daß die Heizelemente 54 entfernt werden können. Daraufhin fahren die Schlitten 32, 34 die Profile 50 wieder gegeneinander, um sie aneinanderzufügen. Dies ist in Fig. 2 dargestellt. Die Profile werden mit einem vorgegebenen höheren Druck gegeneinandergepreßt und erkalten gelassen. Nach dem Erkalten werden die Spannplatten drucklos gemacht und die Aggregate in eine erste Entnahmeposition gefahren, wie dies in Fig. 3 dargestellt ist.

Bei drucklos geschalteten Spannplatten werden der Aggregatträger 18 und die Schweißaggregate 20, 26 in Richtung der Pfeile verstellt, bis die Konterprofile 44, 46 und die zugehörigen Auflagen und Spannplatten die in Fig. 3 gezeigte Position erreicht haben. In dieser sind alle Schweißwülste freigegeben, auch der Schweißwulst der miteinander verschweißten Dichtlippen. Bei dieser Verstellung versteht sich, daß auch die Verstellzylinder 36, 38 der Aggregate drucklos geschaltet sind, damit sie bei der beschriebenen Verstellung nachgeben können. Die hierbei durchgeführte Bewegung ist durch die gestrichelten Pfeile angedeutet. Nunmehr können die Spannplatten angehoben werden, damit der aus den Profilen 50 gebildete Rahmen seinerseits angehoben werden kann. Dieser Anhebemechanismus ist nicht dargestellt. Anschließend fahren die Verstellzylinder 36, 38 die zugeordneten Schlitten 32, 34 in eine Position, daß der Rahmen auf zwei Förderbändern 90 abgelegt werden kann, damit es abtransportiert wird. Damit ist ein Rahmen fertiggestellt und der Fertigungszyklus kann erneut beginnen.

## Patentansprüche

1. Verfahren zum Betrieb einer Vorrichtung zum Verschweißen von Profilen aus Kunststoff, insbesondere für Fensterrahmen, die vier Schweißaggregate (20, 22, 26, 28) aufweist, von denen jeweils zwei auf einem von zwei parallelen Aggregatträgern (16, 18) angeordnet sind, wobei jeweils ein Aggregat (20, 26) eines Paares relativ zum anderen auf dem Aggregatträger (16, 18) und ein Aggregatträger (18) relativ zum anderen Aggregatträger (16) verstellbar ist, wobei ferner jedes Aggregat (20, 22, 26, 28) zwei Auflagen (40, 42), zwei mit den Auflagen (40, 42) verbundene Konterprofile (44, 46) und zwei Druckplatten (72, 74) für die Enden der jeweils eingelegten Profile (50) aufweist, die jeweils entlang senkrecht aufeinanderstehenden Verstellachsen mittels eines Vorschubschlittens (32, 34) relativ zueinander verstellbar sind und die Auflagen (40, 42), Konterprofile (44, 46) und Druckplatten (72, 74) Messerkanten (78, 80, 82) aufweisen für die Schweißwulstbegrenzung, ferner einen verstellbaren Zentrieranschlag (52) und ein verstellbares Heizelement (54) an jedem Aggregat (20, 22, 26, 28), gekennzeichnet durch folgende Schritte:
- die Profile (50) werden so auf die Auflager (40, 42) aufgelegt, daß die Konterprofile (44, 46) über die Enden der Profile (50) überstehen
- Aggregatträger (18) und Aggregate (20, 26) werden so verfahren, daß sich die Enden der Profile gegen einen dazwischengefahrenen Zentrieranschlag (52) legen und die Enden der Profile (50) um einen Betrag über die Konterprofile (44, 46) überstehen, der annähernd dem Abbrand beim Erwärmen der zu verbindenden Profile (50) entspricht
- die Profile (50) werden mittels der Druckplatten (72, 74) auf den Auflagen (40, 42) festgelegt und zum Entfernen des Zentrieranschlags (52) und Einfahren des Heizelements (54) von den Schlitten (32, 34) auseinandergefahren
- nach dem Entfernen des Heizelements durch Betätigung der Schlitten (32, 34) werden die Profile (50) gegeneinandergepreßt und erkalten gelassen
- die Druckplatten (72, 74) werden entspannt und die Schweißaggregate (22, 24, 26, 28) bei drucklosen Schlitten (32, 34) so aufeinander zu gefahren, daß die Konterprofile (44, 46) entlang der Profile (50) im Abstand zu den Enden der Profile (50) verschoben liegen und
- nach Anheben der Druckplatten (72, 74) wird der Rahmen von den Auflagen (40, 42) und den Konterprofilen (44, 46) abgehoben und entfernt.

2. Verfahren nach Anspruch 1, dadurch gekennzeichnet, daß nach dem Anheben des Rahmens die Schlitten (32, 34) vom Rahmen entfernt werden zur Absenkung des Rahmens auf eine Abfördervorrichtung.

3. Vorrichtung zur Durchführung des Verfahrens nach Anspruch 1 oder 2, dadurch gekennzeichnet, daß die Konterprofile (44, 46) eine Begrenzungsnut (62) für eine an den Profilen (50) angebrachte Dichtlippe aufweisen, die an den Querschnitt der Dichtlippe angepaßt in einem Auflageabschnitt (64) am vorderen Ende der Konterprofile (44, 46) geformt ist, wobei sich an die Begrenzungsnut (62) eine Aufnahmenut (60) anschließt, in der die Dichtlippe frei aufnehmbar ist.

4. Vorrichtung nach Anspruch 3, dadurch gekennzeichnet, daß das Konterprofil (44, 46) angrenzend an die Begrenzungsnut (62) auch horizontale Messerkanten (66, 70) aufweist.

5. Vorrichtung nach Anspruch 3 oder 4, dadurch gekennzeichnet, daß die Konterprofile auch horizontale bzw. von der Vertikalen abweichende Messerkanten aufweisen.

## Claims

1. A method for operating an apparatus for welding plastic profiles, in particular for frames of windows, the apparatus including four welding units (20, 22, 26, 28), two of the units being positioned on one of two parallel supports (16, 18) for the units, with one of the units of a pair of units being displaceable on the associated support (16, 18) relative to the other unit, and one support (18) being displaceable relative to the other support (16), each unit (20, 22, 26, 28) having two seating portions (40, 42), two counter profiles (44, 46) attached to the seating portions and two pressure plates (72, 74) for the ends of inserted profiles (50) which are displaced relative to each other along orthogonal displacement axes by a feed carriage (32, 34), the seating portions (40, 42), counter profiles (44, 46) and pressure plates (72, 74) having knife edges (78, 80, 82) for the limitation of welding beads, and further including a displaceable centering stop (52) and a displaceable heating element (54) on each unit (20, 22, 26, 28), characterized by the following steps:
- the profiles (50) are placed on the seating portions (40, 42) such that the counter profiles (44, 46) project beyond the ends of the profiles (50),
- the support (18) and the units (20, 26) are displaced such that the ends of the profiles are brought into engagement with the centering stop (52) inserted therebetween and that the profiles (50) project beyond the counter profiles (44, 46) to an extent which approximately corresponds to the melting loss upon heating of the profiles (50) to be connected,
- the profiles (50) are fixed to the seating portions (40, 42) by the pressure plates (73, 74) and moved away from each other by the carriages (32, 30) in order to remove the centering element (52) and insert the heating element (54),
- the profiles (50) are pressed against each other by actuation of the carriages (32, 34) and cooled off,
- the pressure plates (72, 74) are relieved and the welding units (20, 22, 26, 28) are moved towards each other with the carriages being relieved from pressure such that the counter profiles (44, 46) are displaced along the profiles by being spaced from the ends of the profiles and
- the frame is lifted above the seating portions (40, 42) and the counter profiles (44, 46) and removed after lifting of the pressure plates.

2. The method of claim 1, wherein after the lifting of the frame the carriages (32, 34) are removed from the frame in order to lower the frame onto conveying means.

3. An apparatus to carry out the method of claim 1 or 2, characterized in that the counter profiles (44, 46) include a limitation groove (62) for a sealing lip attached to the profiles (50), the groove being matched to the cross section of the sealing lip and is formed in a seating portion (64) at the front end of the counter profiles (44, 46) and an accommodation groove joining to the limitation groove (62) wherein the sealing lip can be freely accommodated.

4. The apparatus of claim 3, wherein adjacent to limitation groove (62) the counter profile (44, 46) also has horizontal knife edges (66, 70).

5. The apparatus of claim 3 or 4, wherein the counter profiles also have knife edges extending horizontally or in a direction deviating from the vertical axis.

## Revendications

1. Procédé pour faire fonctionner un dispositif de soudage de profiles en plastique, notamment pour cadres de fenêtres, présentant quatre organes de soudage (20, 22, 26, 28) disposés respectivement par paire sur l'un parmi deux supports d'organes (16, 18) parallèles, l'un des organes (20, 26) d'une paire pouvant se déplacer par rapport à l'autre sur le support d'organes correspondant (16, 18) et l'un des supports d'organes (18) pouvant se déplacer par rapport à l'autre support d'organes (16), chaque organe (20, 22, 26, 28) présentant en outre deux pièces d'appui (40, 42), deux contre-profilés (44, 46) reliés aux pièces d'appui (40, 42) et deux plaques de pression (72, 74) pour les extrémités respectives des profilés (50) mis en place, les profilés pouvant être déplacés l'un par rapport à l'autre à l'aide d'un chariot d'avancement (32, 34) le long d'axes de réglage perpendiculaires l'un à l'autre, les pièces d'appui (40, 42), les contre-profilés (44, 46), et les plaques de pression (72, 74) présentant des lames de couteau (78, 80, 82) pour limiter les bourrelets de soudage et en outre une butée de centrage (52) réglable ainsi qu'un élément chauffant (54) réglable sur chaque organe (20, 22, 26, 28), caractérise par les étapes suivantes :
- les profilés (50) sont posés sur les pièces d'appui (40, 42) de telle sorte que les contre-profilés (44, 46) dépassent des extrémités des profilés (50),
- les supports d'organes (18) et les organes (20, 26) sont déplacés de telle sorte que les extrémités des profilés s'appuient contre une butée de centrage (52) qui est amenée entre ces extrémités et que les extrémités des profilés (50) dépassent des contre-profilés (44, 46) d'une valeur correspondant approximativement à la réduction par chauffage se produisant lors de l'échauffement des profilés (50) à relier,
- les profilés (50) sont immobilisés à l'aide des plaques de pression (72, 74) sur les pièces d'appui (40, 42) et écartés l'une de l'autre par les chariots (32, 34) pour écarter la butée de centrage (52) et introduire l'élément de chauffage (54),
- une fois l'élément chauffant écarté par l'actionnement des chariots (32, 34), les profilés (50) sont pressés les uns contre les autres et mis à refroidir,
- les plaques de pression (72, 74) sont desserrées et les organes de soudage (22, 24, 26, 28) rapprochés les uns des autres, une fois la pression des chariots relâchée, de telle sorte que les contre-profilés (44, 46) soient décalés le long des profilés (50), à une certaine distance des extrémités de ces derniers (50) et
- une fois les plaques de pression (72, 74) soulevées, le cadre est soulevé et enlevé des pièces d'appui (40, 42) et des contre-profilés (44, 46).

2. Procédé selon la revendication 1, caractérisé en ce que, une fois le cadre soulevé, les chariots (32, 34) sont séparés du cadre pour que celui-ci puisse être déposé sur un dispositif de convoyage.

3. Dispositif pour réaliser le procédé selon la revendication 1 ou 2, caractérisé en ce que les contre-profilés (44, 46) présentent une rainure de limitation (62) d'une lèvre d'étanchéité montée sur les profilés (50), cette rainure étant adaptée à la section transversale de la lèvre d'étanchéité, et ménagée dans une portion (64) de la pièce d'appui à l'extrémité avant des contre-profilés (44, 46), la rainure de limitation (62) étant raccordée à une rainure (60) dans laquelle la lèvre d'étanchéité peut se loger librement.

4. Dispositif selon la revendication 3, caractérisé en ce que le contre-profilé (44, 46) présente également des lames de couteau (66, 70) horizontales contigües à la rainure de limitation (62).

5. Dispositif selon la revendication 3 ou 4, caractérisé en ce que les contre-profilés présentent également des lames de couteau horizontales ou des lames de couteau s'écartant de la verticale.
